# EUROPÄISCHE PATENTSCHRIFT

(11) **EP 2 946 425 B1**
(45) Veröffentlichungstag und Bekanntmachung des Hinweises auf die Patenterteilung: **06.09.2017**
(21) Anmeldenummer: 14700474.1
(22) Anmeldetag: 14.01.2014
(51) Int. Cl.: H01M 2/10, H01M 10/658, H01M 10/659, H01M 2/02, C09K 21/00, H01M 10/052, H01M 10/6235

(54) **AKKUMULATOR MIT FEUERHEMMENDER AUSRÜSTUNG FÜR EINE HANDWERKZEUGMASCHINE UND VERFAHREN ZUM HERSTELLEN DESSELBEN**
ACCUMULATOR WITH FIRE RETARDING DESIGN FOR A POWER TOOL AND METHOD OF MANUFACTURE
ACCUMULATEUR IGNIFUGE POUR OUTIL À MAIN ET SON PROCÉDÉ DE MANUFACTURE

(30) Priorität: 16.01.2013 DE 102013200546
(43) Veröffentlichungstag der Anmeldung: 25.11.2015
(73) Patentinhaber: Hilti Aktiengesellschaft, 9494 Schaan (LI)
(72) Erfinder: VERHAAG, Benno, 82256 Fürstenfeldbruck (DE); ZIEGLER, Bernd, 86856 Hiltenfingen (DE); HAUSER, Klaus, 86830 Schwabmünchen (DE); BRANDNER, Michael, 86807 Buchloe (DE); LUDWIG, Hubert, 86859 Igling (DE)
(86) Internationale Anmeldenummer: PCT/EP2014/050551
(87) Internationale Veröffentlichungsnummer: WO 2014/111364

(56) Entgegenhaltungen:
- EP-A2- 2 244 318
- US-A1- 2010 136 404
- US-A1- 2011 014 514
- US-A1- 2011 064 997
- US-A1- 2011 192 564
- US-A1- 2011 300 431

## Beschreibung

### GEBIET DER ERFINDUNG

Die vorliegende Erfindung betrifft einen Akkumulator für eine Handwerkzeugmaschine und ein Verfahren zum Herstellen eines Akkumulators für eine Handwerkzeugmaschine.

Da jeder Akkumulator eine Energiequelle darstellt, die ohne äußeren Einfluss in der Lage ist, einen Strom zu liefern und an der auch im unbenutzten Zustand eine Spannung anliegt, entstehen im Fehlerfall Gefahren für Mensch und Umwelt. In einem Fehlerfall kann ungewollt und unkontrolliert Energie, beispielsweise in Form von Strom, Spannung oder Wärme, freigesetzt werden.

Es kann auch zu einer Kettenreaktion kommen, bei der benachbarte Akkumulatorzellen einer fehlerhaften Akkumulatorzelle derart erhitzt werden, dass es zum so genannten "Thermal Runaway" (thermisches Durchgehen) kommt. Der "Thermal Runaway" ist ein nicht aufhaltbarer chemischer Prozess und führt zur Zerstörung der Zellen, wobei Flammen entstehen können.

Vor allem bei Lithium-Ionen-Akkumulatoren wird diese Kettenreaktion durch den Sauerstoffgehalt der Luft begünstigt, sobald durch das Zell-Ventil austretendes Elektrolyt mit dem Sauerstoff reagiert. In der Zelle kommt es durch Dendritenbildung zu einem internen Kurzschluss, der zu einer Überschreitung des Siedepunktes führt. Die geschmolzenen Stoffe sind sehr reaktiv und leicht entflammbar. Daher kann es kann schnell zu dem explosionsartigen "Thermal Runaway" kommen.

Derartige Fehlerfälle sollten möglichst verhindert werden oder es sollten zumindest die Folgen und Gefahren so gut wie möglich gemindert werden und Mensch und Umwelt geschützt werden. Einige Hersteller von Akkumulatoren bieten Sicherheitseinrichtungen an, die beispielsweise bei einer Übertemperatur oder einem Überstrom eine Art Sicherheitsventil öffnen, um den entstehenden Überdruck in einer Akkumulatorzelle abzulassen. Es besteht jedoch immer ein Restrisiko, so dass im ungünstigsten Fall eine Explosion einzelner Akkumulatorzellen und auch eines gesamtes Akkumulators möglich ist.

### OFFENBARUNG DER ERFINDUNG

Der erfindungsgemäße Akkumulator für eine Handwerkzeugmaschine weist eine Anzahl von Akkumulatorzellen auf, wobei mindestens eine der Akkumulatorzellen als Isolations-Akkumulatorzelle ausgeführt ist. Weiter weist der Akkumulator einen ein intumeszierendes Material aufweisenden Brandschutzmantel auf, welcher die Isolations-Akkumulatorzelle zumindest teilweise derart ummantelt, dass die Isolations-Akkumulatorzelle bei einer vorgegebenen Temperatur von dem Brandschutzmantel derart umgeben ist, dass die Isolations-Akkumulatorzelle thermisch isoliert ist, dadurch gekennzeichnet, dass der Brandschutzmantel eine Netzstruktur aufweist. Fehlerhafte Akkumulatorzellen können so nach außen hin abgeschottet werden. Mensch und Umwelt können vor der Ausbreitung von Hitze geschützt werden, und die Sicherheit des Benutzers der Handwerkzeugmaschine kann erhöht werden. Im Idealfall kann in einem Fehlerfall, beispielsweise bei einer fehlerhaften, heißen oder brennenden Akkumulatorzelle, verhindert werden, dass auftretende, übermäßige Hitzebildung auf umliegende Gegenstände übergreift und einen Schaden anrichtet. Vorteilhafterweise kann verhindert werden, dass der Akkumulator anfängt zu brennen, oder es kann ein Feuer gelöscht oder eingedämmt werden. Diese Form des Brandschutzes kann weitgehend unabhängig von der Zellentechnologie, der Bauform der Einzelzellen und der Bauform des Gesamtakkus gestaltet werden.

Die Lebensdauer der Zellen und auch die Lebensdauer des gesamten Akkumulators kann verlängert werden, wenn der Brandschutzmantel derart ausgebildet ist, dass eine Reduzierung von Vibrationen, die auf einzelne Zellen wirken, erzielt wird. So kann die Belastung des Akkumulators reduziert werden und eine längere Lebensdauer des Akkumulators erreicht werden.

Ein Akkumulator ist ein wiederaufladbarer Speicher für elektrische Energie auf elektrochemischer Basis. Akkumulatoren können miteinander kombiniert werden. Beispielsweise in Reihenschaltung zur Steigerung der nutzbaren elektrischen Spannung oder in Parallelschaltung zur Steigerung der nutzbaren Kapazität.

Eine Handwerkzeugmaschine ist insbesondere eine elektrische Handwerkzeugmaschine, wie zum Beispiel ein Elektroschrauber.

Der Elektroschrauber hat ein Gehäuse mit einem Handgriff, mittels welchem ein Anwender den Elektroschrauber halten und führen kann. Ein Taster an dem Handgriff ermöglicht dem Anwender den Elektroschrauber in Betrieb zu nehmen. Beispielsweise muss der Anwender den Taster durchgehend gedrückt halten, um den Elektroschrauber in Betrieb zu halten.

Die Akkumulatorzelle ist eine Zelle oder Batteriezelle beispielsweise einer wiederaufladbaren Batterie oder eines Akkumulators. Die Akkumulatorzelle ist beispielsweise ein Lithium-Ionen-Akku oder ein Lithium-Polymer-Akku. Die Akkumulatorzelle kann auch Teil eines Batteriepakets sein.

Vorzugsweise ist in dem Akkumulator eine Mehrzahl von Akkumulatorzellen vorhanden.

Ein intumeszierendes Material ist ein Material, das eingerichtet ist, bei einer bestimmbaren Übertemperatur ihr Volumen zu vergrößern, und beispielsweise aufzuquellen. Vorzugsweise ist das intumeszierende Material brandhemmend. Durch Verwendung einer brandhemmenden Substanz kann eine Möglichkeit bereitgestellt werden, eine Akkumulatorzelle oder einen Akkumulator, der mehr als eine Akkumulatorzelle aufweisen kann, in Akkumulatorzellennähe zu löschen. Zweckmäßigerweise tritt bei einer starken Hitzeentwicklung, die über die normale Betriebstemperatur hinausgeht, eine chemische Reaktion in Kraft, die verhindert, dass es zu einem Flammenaustritt und/oder einer größeren Hitzeentwicklung kommen kann. Vorteile sind erzielbar, wenn das Material geeignet ist, die Ausbreitung von Feuer und/oder heißen Gasen zu verhindern.

Der Brandschutzmantel weist bevorzugt schäumbares Bindemittel, das ein aschebildendes und intumeszierendes Stoffgemisch enthält, auf. Das Bindemittel dient dabei als verbundbildender Träger für das aschebildende und intumeszierende Stoffgemisch. Bevorzugt ist das Stoffgemisch homogen in dem Bindemittel verteilt. Der verbundbildenden Träger ist bevorzugt aus der Gruppe ausgewählt, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon, wobei Polyurethane bevorzugt sind.

Zweckmäßig werden als Brandschutzadditive intumeszierende Flammschutzmittel eingesetzt, die durch die Bildung einer sich unter Hitzeeinwirkung bildenden, aufgeblähten, isolierenden Schicht aus schwerentflammbaren Material, die das Substrat vor Überhitzung schützt wirken.

In einer bevorzugten Ausführungsform der Erfindung umfassen die Brandschutzadditive mindestens einen Kohlenstoffgerüstbildner, mindestens ein Treibmittel, mindestens einen anorganischen Gerüstbildner und mindestens einen Säurebildner. Die Komponenten des Brandschutzadditivs werden insbesondere so ausgewählt, dass sie einen Synergismus entwickeln können, wobei einige der Verbindungen mehrere Funktionen erfüllen können.

Für die Ausbildung einer intumeszierenden Schicht sind allgemein drei Komponenten erforderlich, ein Kohlenstofflieferant, ein Dehydrierungskatalysator und ein Treibmittel, die beispielsweise bei Beschichtungen in einem Bindemittel enthalten sind. Bei Hitzeinwirkung erweicht das Bindemittel und die Brandschutzadditive werden freigesetzt. Durch thermische Zersetzung wird aus dem Dehydrierungskatalysator die Säure freigesetzt, die dem Kohlenstofflieferanten und/oder dem Bindemittel Wasser entziehen, was zu deren Verkohlung (Carbonisierung) und somit zur Bildung einer Kohlestruktur, der sogenannten Aschekruste führt. Gleichzeitig zersetzt sich das Treibmittel thermisch unter Bildung nicht-brennbarer Gase, die ein Aufschäumen des carbonisierten (verkohlten) Materials unter Bildung eines isolierenden Schaums bewirkt. Da die im Brandfall durch das Bindemittel gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt eine Verbindung gegeben, die die durch das Bindemittel gebildete Aschekruste zu stabilisieren vermag oder selbst ein Gerüst bildet, wodurch die isolierende Wirkung der Beschichtung aufrechterhalten oder verstärkt wird.

Als Dehydrierungskatalysatoren bzw. Säurebildner kommen die in intumeszierenden Flammschutzmitteln üblicherweise verwendeten Verbindungen, in Betracht, wie ein Salz oder ein Ester einer anorganischen, nicht flüchtigen Säure, ausgewählt unter Schwefelsäure, Phosphorsäure oder Borsäure. Im wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphate sind dabei Verbindungen wie Umsetzungsprodukte aus Lamelite C (Melamin-FormaldehydHarz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroaniline-2-sulfonsäure und 4,4-Dinitrosulfanilamid und dergleichen. Als Borsäureverbindung kann Melaminborat beispielhaft erwähnt werden.

Als Kohlenstofflieferant kommen die in intumeszierenden Flammschutzmitteln bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Polyvinylacetat, Polyvinylalkohol, Sorbitol, EO-PO-Polyole. Bevorzugt werden Pentaerythrit, Dipentaerythrit oder Polyvinylacetat eingesetzt.

Es sei erwähnt, dass das Bindemittel im Brandfall selbst auch die Funktion eines Kohlenstofflieferanten haben kann.

Als Treibmittel kommen die üblicherweise in Flammschutzmitteln verwendeten Verbindungen in Betracht, wie Cyanursäure oder Isocyansäure und deren Derivate, Melamin und deren Derivate. Solche sind Cyanamid, Dicyanamid, Dicandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt. Weitere Beispiele sind in der GB 2 007 689 A1, EP 139 401 A1 und US-3 969 291 A1 beschrieben.

Als Aschekrustenstabilisatoren bzw. Gerüstbildner kommen die üblicherweise in Flammschutzmitteln verwendeten fVerbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisierer wie Melaminphosphat oder Melaminborat enthalten sein.

Die Zusammensetzung kann neben den Brandschutzadditiven gegebenenfalls übliche Hilfsmittel wie Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Der verbundbildende Träger kann ferner als ablatives Additiv, eine anorganische Verbindung, die Wasser, z.B. als Kristallwasser, fest eingelagert hat und bei Temperaturen bis 100°C nicht austrocknet, dieses aber im Brandfall ab 120°C freisetzt und dadurch temperaturführende Teile kühlen kann, bevorzugt ein bei der Brandtemperatur bzw. bei Beflammung wasserabgebendes anorganisches Hydroxid oder Hydrat, insbesondere Aluminiumhydroxid, Aluminiumoxidhydrate oder teilhydratisierte Aluminiumhydroxide. Es kommen aber auch andere, bei der Beflammung wasserabgebende anorganische Hydroxide oder Hydrate in Betracht, wie sie in der EP 0 274 068 A2 beschrieben sind.

Derartige Verbindungen, die als Stoffgemisch in dem erfindungsgemäßen Brandschutzmantel eingesetzt werden können, sind beispielsweise in den folgenden Druckschriften offenbart, auf die hiermit ausdrücklich Bezug genommen sei: DE 30 25 309 A1, DE 30 41 731 A1, DE 33 02 416 A1, DE 34 11 327 A1, EP 0 043 952 B1, EP 0 051 106 B1, EP 0 061 024 B1, EP 0 116 846 B1, EP 0 158 165 B1, EP 0 274 068 A2, EP 1 347 549 A1, EP 1 641 895 B1 und DE 196 53 503 A1.

Ein *"Kohlenstofflieferant"* ist eine organische Verbindung, die durch Wasserabspaltung zu Kohlenstoff und Kohlendioxid zersetzt wird (Carbonifizierung); diese Verbindungen werden auch als *"Kohlenstoffgerüstbildner"* bezeichnet.

Ein *"Säurebildner"* ist eine Verbindung, die sich unter Hitzeeinwirkung, d.h. oberhalb etwa 150°C zersetzt und eine nicht flüchtige Säure freisetzt und dadurch als Katalysator für die Carbonifizierung wirkt; zudem trägt sie zur Erniedrigung der Viskosität der Schmelze des Bindemittels bei; hiermit gleichbedeutend wird der Begriff *"Dehydrierungskatalysator"* verwendet.

Ein *"Treibmittel"* ist eine Verbindung, die sich bei erhöhter Temperatur unter Entwicklung inerter, d.h. nicht-brennbarer Gase zersetzt und die Schmelze des Bindemittels zu einem Schaum aufbläht (Intumeszenz); dieser Begriff wird gleichbedeutend mit *"Gasbildner"* verwendet.

Ein *"Aschekrustenstabilisator"* ist eine sogenannte gerüstbildende Verbindung, die das Kohlenstoffgerüst, das aus dem Zusammenwirken der Kohlenstoffbildung aus der Kohlenstoffquelle und dem Gas aus dem Treibmittel gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern. Ein Beispiel hierfür ist die Ausbildung von Titanatphosphaten aus den beiden Komponenten Titandioxid und Ammoniumpolyphosphat.

Für die physikalische Intumeszenz wird im Allgemeinen Blähgraphit verwendet. Dieser kann wie die oben genannten Additive (oder zusätzlich zu diesen) ins Trägermaterial eingebunden werden.

In diesem Zusammenhang wird auf das Dokument EP1489136 A1 hingewiesen.

Als Blähgraphit kommen beispielsweise bekannte Einlagerungsverbindungen von SOx, NOx, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzmänteln gleichmäßig verteilt. Die Konzentration an Blähgraphitteilchen kann aber auch punktuell, musterartig, flächig und/oder sandwichartig variiert sein.

Die vorgegebene Temperatur liegt vorzugsweise über der Betriebstemperatur derjenigen Akkumulatorzelle in dem Akkumulator, die die höchste Betriebstemperatur aufweist, liegen. Zweckmäßigerweise liegt die vorgegebene Temperatur unter einer Temperatur, durch die eine der Akkumulatorzellen in dem Akkumulator geschädigt werden könnte.

Zweckmäßigerweise ist der Brandschutzmantel bei der vorgegebenen Temperatur dazu eingerichtet, die Ausbreitung von Wärmeenergie zu reduzieren, vorzugsweise zu verhindern. Vorzugsweise ist der Brandschutzmantel derart ausgebildet, dass er sich der Akkumulatorzellform gut anpassen lässt, so dass sich Brandschutzmaterial platzsparend anordnen lässt. Zweckmäßigerweise ist der Brandschutzmantel derart in dem Batteriepack angeordnet, dass er den regulären Betrieb nicht stört und erst im Fehlerfall aktiv und präventiv wirksam wird.

Vorzugsweise ist die Isolations-Akkumulatorzelle bei einer vorgegebenen Temperatur thermisch von den anderen Akkumulatorzellen isoliert. Dadurch kann die Übertragung von Wärmeenergie von der Isolations-Akkumulatorzelle auf die anderen Akkumulatorzellen reduziert oder ganz verhindert werden. Wenn eine Übertemperatur in eine Akkumulatorzelle auftritt, kann eine Erhitzung der anderen Akkumulatorzellen, so dass es zum so genannten "Thermal Runaway" kommt, verhindert werden. Bei thermischer Überlastung kann mit Hilfe eines schwer entflammbaren und/oder branderstickenden Materials ein Übergreifen auf Nachbarzakkumulatorzellen, deren Umfeld, das Gehäuse, Mensch und Umwelt verhindert werden.

In einer bevorzugten Ausführungsform ist der Brandschutzmantel eingerichtet, bei der vorgegebenen Temperatur die Sauerstoffzufuhr zu der Isolations-Akkumulatorzelle zu verringern. Dadurch kann ein entstandener Brand wieder gelöscht werden. Besonders bevorzugt ist der Brandschutzmantel eingerichtet, bei der vorgegebenen Temperatur die Sauerstoffzufuhr zu der Isolations-Akkumulatorzelle für einen vorgegebenen Zeitraum zu verhindern.

Es ist vorteilhaft, wenn der Brandschutzmantel eingerichtet ist, bei der vorgegebenen Temperatur flüssigkeitsdicht zu sein. So kann erreicht werden, dass weniger Flüssigkeit aus der Isolations-Akkumulatorzelle in die Umgebung gelangt. Bevorzugt wird ein Brandschutzmantel eingesetzt, der geeignet ist, den Durchtritt von Flüssigkeiten vollständig zu verhindern. Zweckmäßigerweise ist der Brandschutzmantel dicht gegenüber Elektrolyten. In einer Ausführungsform weist der Brandschutzmantel ein Polymer auf. Unter den Polymeren finden sich besonders geeignete verbundbildende Träger, daher sind sie geeignete Werkstoffe für den Brandschutzmantel.

Ein Polymer ist eine chemische Verbindung aus Ketten- oder verzweigten Molekülen, die wiederum aus gleichen oder gleichartigen Einheiten, den Monomeren, bestehen.

In der erfindungsgemäßen Ausführungsform weist der Brandschutzmantel eine Netzstruktur auf. Eine Netzstruktur kann auf einfache Weise derart ausgebildet werden, dass während eines störungsfreien Anwendungsbetriebs Umgebungsluft hindurchtreten kann, um beispielsweise Einzelteile zu kühlen. In einer Netzstruktur kann genügend Material vorgesehen sein, um bei einer vorgegebenen Temperatur eine thermische Isolierung und/oder einen Löscheffekt, beispielsweise durch eine Verringerung des Sauerstoffdurchtritts, erreichen zu können.

In einer Ausführungsform weist der Brandschutzmantel ein Brandschutzband, eine Brandschutzmatte, einen Brandschutzschaum oder eine Schaumstoffmatte auf. Der Brandschutzmantel kann so auf besonders einfache Weise bereitgestellt werden.

Ein Brandschutzband ist ein auf dem Markt erhältliches Band, das üblicherweise zur Abschottung von brennbaren Rohren bei Durchführungen durch Wände und Decken eingesetzt wird. Ein Brandschutzschaum ist beispielsweise zur Abschottung von Kabeln, Kabelbündeln, Kabeltrassen und Rohren bekannt und ebenfalls auf dem Markt erhältlich. Eine Brandschutzmatte ist beispielsweise zum Brandschutz im Bereich von Hohlwanddosen bekannt. Auch Brandschutzmatten sind auf dem Markt erhältlich.

Eine Schaumstoffmatte ist eine Matte, die eine niedrige Dichte und eine zellige Struktur aufweist. Als Material für die Schaumstoffmatte können beispielsweise Polyurethane, Polystyrole, Polyethylen, Elastomere und Gemische davon eingesetzt werden, wobei Polyurethane bevorzugt sind.

Es wird besonders bevorzugt, wenn alle Akkumulatorzellen als Isolations-Akkumulatorzellen ausgebildet sind. Dies ermöglicht einen sehr großen Schutz vor Brandschäden an einzelnen Akkumulatorzellen des Akkumulators und in der Umgebung.

In einer Ausführungsform sind mindestens zwei Isolations-Akkumulatorzellen als Flachzellen ausgebildet, der Brandschutzmantel weist eine Brandschutzmatte oder ein Brandschutzband auf und die Brandschutzmatte oder das Brandschutzband ist zwischen den beiden als Flachzellen ausgebildeten Isolations-Akkumulatorzellen angeordnet. Eine Ummantelung der Isolations-Akkumulatorzelle ist so auf einfache Weise zu erreichen.

Vorzugsweise ist eine Flachzelle eine Akkumulatorzelle, deren Tiefe geringer ist als deren Breite und Höhe. In einer bevorzugten Ausführungsform weist eine Flachzelle mindestens eine flache Oberfläche auf.

Es befindet sich zumindest ein Teil der Brandschutzmatte oder des Brandschutzbandes zwischen den beiden als Flachzellen ausgebildeten Isolations-Akkumulatorzellen. In einer Ausführungsform ist ein Brandschutzmantel vollständig zwischen den beiden als Flachzellen ausgebildeten Isolations-Akkumulatorzellen angeordnet. In diesem Fall ist vorzugsweise ein weiterer Brandschutzmantel in dem Akkumulator vorhanden, der eingerichtet ist, bei der vorgegeben Temperatur einen weiteren Bereich der Isolations-Akkumulatorzelle abzudecken.

In einer Ausführungsform ist mindestens eine Isolations-Akkumulatorzelle als Rundzelle ausgebildet, der Brandschutzmantel weist eine Brandschutzmatte oder ein Brandschutzband auf und die Brandschutzmatte oder das Brandschutzband ist um die als Rundzelle ausgebildete Isolations-Akkumulatorzelle herum angeordnet. Auch auf diese Weise kann eine Ummantelung der Isolations-Akkumulatorzelle einfach erreicht werden.

Eine Rundzelle ist vorzugsweise eine Akkumulatorzelle, die einen runden Querschnitt aufweist. In einer bevorzugten Ausführungsform weist eine Rundzelle eine zylindrische Form auf.

Die Sicherheit lässt sich besonders stark erhöhen, wenn der Brandschutzmantel alle Akkumulatorzellen zusammen zumindest teilweise derart ummantelt, dass die Akkumulatorzellen in dem Akkumulator bei der vorgegebenen Temperatur von dem Brandschutzmantel derart umgeben sind, dass die Akkumulatorzellen von der Umgebung thermisch isoliert sind.

Zweckmäßigerweise weist der Akkumulator ein Gehäuse auf und der Brandschutzmantel ist zumindest teilweise in das Gehäuse integriert. Der Brandschutzmantel kann so besonders platzsparend bereitgestellt werden.

Besondere Vorteile lassen sich erzielen, wenn der Akkumulator ein Gehäuse aufweist und der Brandschutzmantel zumindest teilweise innerhalb des Gehäuses angeordnetes Material derart ummantelt, dass das Material bei der vorgegebenen Temperatur von dem Brandschutzmantel derart umgeben ist, dass das Material thermisch isoliert ist. Das Material lässt sich so besonders gut gegen hohe Temperaturen schützen.

Ferner wird eine Handwerkzeugmaschine mit einem wie oben beschrieben Akkumulator vorgeschlagen.

Des Weiteren wird ein Verfahren zum Herstellen eines Akkumulators für eine Handwerkzeugmaschine vorgeschlagen. Dabei wird eine Anzahl von Akkumulatorzellen bereitgestellt, wobei mindestens eine der Akkumulatorzellen als Isolations-Akkumulatorzelle vorgesehen ist. Außerdem wird ein intumeszierendes Material aufweisender Brandschutzmantel bereitgestellt. Die Isolations-Akkumulatorzellen werden zumindest teilweise mit dem Brandschutzmantel derart ummantelt, dass die Isolations-Akkumulatorzelle bei einer vorgegebenen Temperatur von dem Brandschutzmantel derart umgeben ist, dass die Akkumulatorzelle thermisch isoliert ist.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: einen Elektroschrauber
- Fig. 2: einen Akkumulator,
- Fig. 3: einen Längsschnitt durch den Akkumulator,
- Fig. 4: einen Querschnitt durch den Akkumulator,
- Fig. 5: einen Querschnitt durch den Akkumulator,
- Fig. 6: einen Querschnitt durch einen Akkumulator mit acht Rundakkumulatorzellen im Normalbetrieb,
- Fig. 7: einen Querschnitt durch einen Akkumulator mit acht Rundakkumulatorzellen im Fehlerfall,
- Fig. 8: einen Querschnitt durch einen Akkumulator mit zwölf Flachakkumulatorzellen im Normalbetrieb, und
- Fig. 9: einen Querschnitt durch einen Akkumulator mit zwölf Flachakkumulatorzellen im Fehlerfall.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

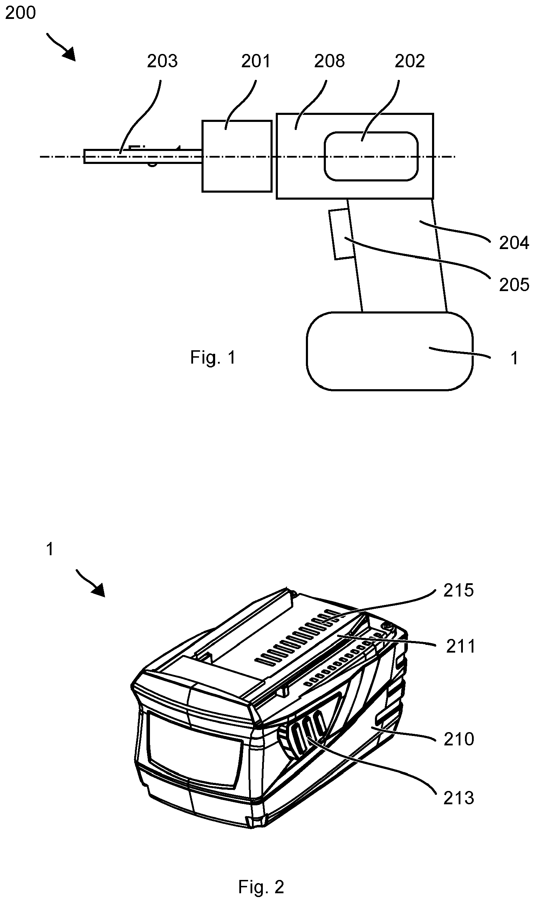

Fig. 1 zeigt schematisch einen Elektroschrauber 200 als Beispiel für eine batteriebetriebene und handgehaltene Handwerkzeugmaschine. Der Elektroschrauber 200 hat eine Werkzeugaufnahme 201, welche von einem Elektromotor 1 angetrieben wird. Der Anwender kann in die Werkzeugaufnahme 201 ein ihm geeignetes Werkzeug 203, z.B. ein Schrauberbit, einen Bohrer, einsetzen. Der Anwender kann den Elektroschrauber 200 während des Betriebs an einem Handgriffs 204 halten und führen. Ein Taster 205 an dem Handgriff 204 steuert die Inbetriebnahme des Elektroschraubers 200. Ein Akkumulator 207 (Batteriepacket) ist an dem Gehäuse 208 des Elektroschraubers 200, beispielsweise nahe des Handgriffs 204, lösbar befestigt. Der Akkumulator versorgt den Elektromotor 202 und andere Verbraucher des Elektroschraubers 200 mit Strom. Andere batteriebetriebene und handgehaltene Handwerkzeugmaschinen sind beispielsweise Bohrmaschinen, Bohrhämmer, Handkreissägen, Stichsägen, tragbare Gebläse, Rasentrimmer, Trennschleifer, etc.

Fig. 2 zeigt eine beispielhaften Akkumulator 1 für eine Handwerkzeugmaschine 200. Der Akkumulator 1 hat ein Gehäuse 210, welches mittels einer Aufhängung 211 an der Handwerkzeugmaschine befestigbar ist. Die Aufhängung 211 kann beispielsweise mittels eines Drückers 213 ver- und entriegelt werden. Der Akkumulator 1 hat innerhalb des Gehäuses 210 mehrere Batteriezellen 2. Lüftungsschlitze 216 in dem Gehäuse 210 ermöglichen eine Kühlung der Batteriezellen 2.

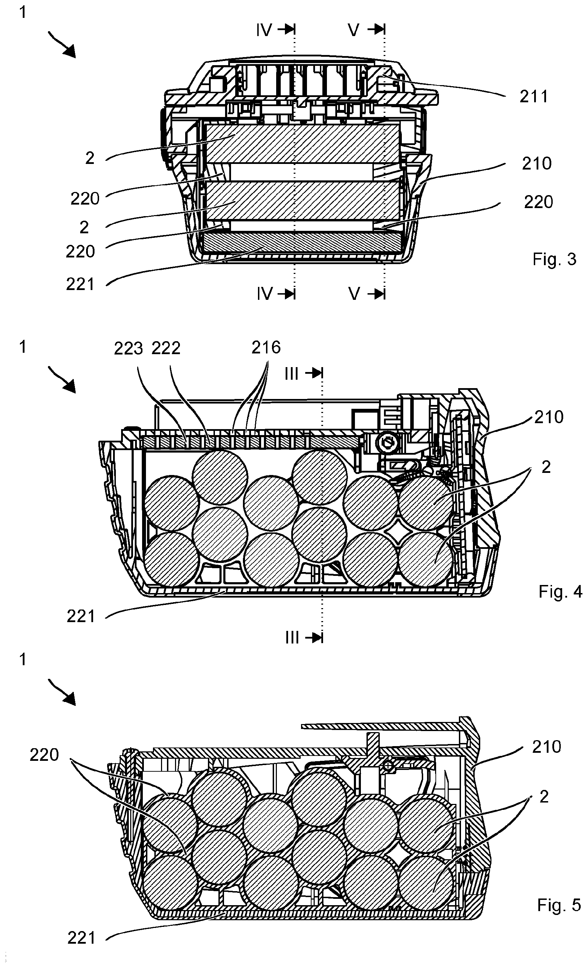

Fig. 3 zeigt einen Längsschnitt in der Ebene III-III durch den Akkumulator, Fig. 4 einen Querschnitt in der Ebene IV-IV und Fig. einen Querschnitt in der Ebene V-V. Die Batteriezellen 2 sind an ihren Enden in zwei Haltern 220 aufgehängt.

Das Gehäuse 210 ist Innen mit einem Mantel aus einem intumeszierenden Material ausgekleidet. Das intumeszierende Material quillt bei einer Hitzeentwicklung durch eine sich stark erhitzende, insbesondere brennende, Batteriezelle 2 auf. Das Material kann zugleich kühlend wirken, indem es Wasser abgibt oder durch chemisch-physikalische Umwandlung eines Brandschutzadditivs Wärmeenergie verbraucht. Die beschriebenen intumeszierenden Materialien wirken dämmend und verzögern eine Hitzeentwicklung an der Außenseite des Akkumulators 1. Auch werden giftige Gase am Austreten gehindert.

Der beispielhafte Mantel ist aus mehreren Teilen zusammengesetzt. Beispielsweise ist am Boden des Gehäuses eine Matte 221 aus dem intumeszierenden Material eingelegt. Eine weitere Matte 222 kann auf eine Oberseite abdecken. Bei dem beispielhaften Akkumulator 1 sind die Belüftungsöffnungen 216 an der Oberseite vorgesehen. Die obere Matte 222 ist ebenfalls mit den entsprechenden Öffnungen 223 versehen. Beim Aufquellen des intumesierenden Materials werden die Öffnungen 223 verschlossen. Weitere Matten schließen die anderen Seiten des Gehäuses 210 ab.

Die Batteriezellen 2 sind vorzugsweise einzeln oder zumindest teilweise einzeln umschlossen. Besonders bevorzugt sind die Halter 220 aus dem intumeszierenden Material gebildet. Das Material liegt direkt an dem Batteriezellen 2 an.

Das Prinzip und andere Ausgestaltungen werden durch die nachfolgend schematischeren Figuren erläutert.

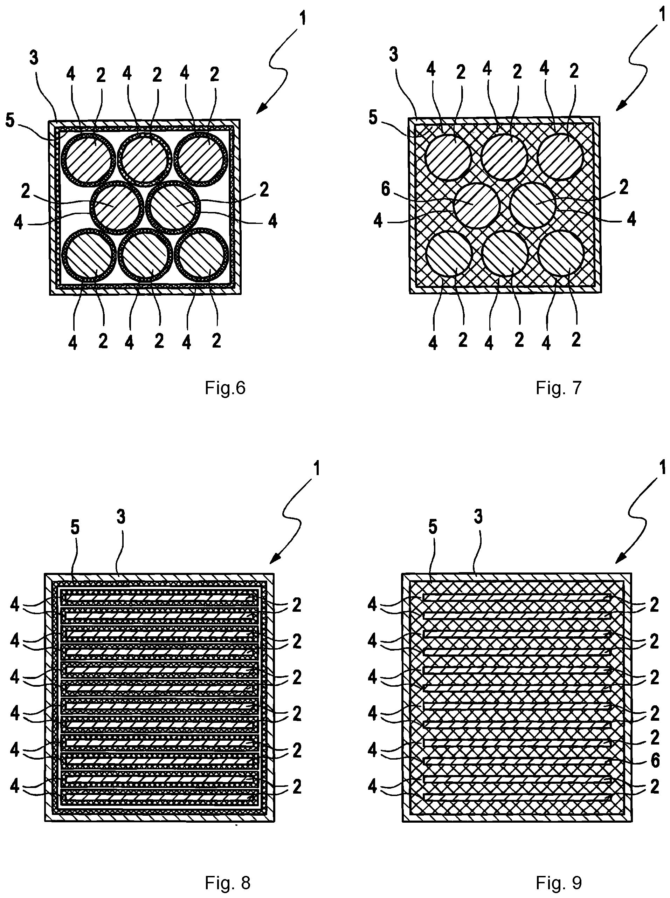

Figur 6 zeigt einen Querschnitt durch einen schematischen Akkumulator 1 mit acht Rundakkumulatorzellen 2 im Normalbetrieb. Die acht Rundakkumulatorzellen 2 sind in einem Gehäuse 3 angeordnet. Um jede der Rundakkumulatorzellen 2 herum ist ein Brandschutzband 4 gewickelt. Alternativ können auch mehrere Brandschutzbänder 4 um eine Rundakkumulatorzelle 2 gewickelt sein.

An der inneren Wand des Gehäuses 3 sind mehrere Brandschutzmatten 5 vorgesehen.

Die Brandschutzbänder 4 und die Brandschutzmatte 5 weisen ein Polyurethan auf. Sie schäumen bei Entstehung einer Hitzeentwicklung, beispielsweise bei einem Brand auf. Es ist so viel Brandschutzband 4 um eine Rundakkumulatorzelle 2 gewickelt sein, dass es im aufgeschäumten Zustand zumindest eine geschlossene Schicht um die Rundakkumulatorzelle 2 herum bildet. Entsprechend sollten die Brandschutzmatten 5 derart angeordnet sein, dass sie im aufgeschäumten Zustand zumindest eine geschlossene Schicht an der Innenwand des Gehäuses 3 bilden.

Figur 7 zeigt einen Querschnitt durch einen Akkumulator 1 mit acht Rundakkumulatorzellen 2 im Fehlerfall. Die eingebrachten Brandschutzbänder 4 und die Brandschutzmatte 5 sind aufgeschäumt und bilden nicht nur geschlossene Schichten, sondern füllen die Hohlräume in dem Gehäuse 3 vollständig aus.

Das Aufschäumen ist durch das Überschreiten der Betriebstemperatur bei einem Brand einer fehlerhaften Akkumumlatorzelle 6 ausgelöst wurden. Durch den Schaum ist die Sauerstoffzufuhr zu dieser fehlerhaften Akkumumlatorzelle 6 unterbrochen worden. Dadurch ist zunächst die Ausbreitung des Feuers verhindert worden und später das Feuer vollständig gelöscht worden. Schäden in der Umgebung des Akkumulators 1 sind vollständig verhindert worden. Selbst die übrigen sieben Rundakkumulatorzellen 2 sind noch intakt.

Figur 8 zeigt einen Querschnitt durch einen Akkumulator 1 mit zwölf Flachakkumulatorzellen 2 im Normalbetrieb. Die zwölf Flachakkumulatorzellen 2 sind in einem Gehäuse 3 angeordnet. Um jede der zwölf Flachakkumulatorzellen herum ist ein Brandschutzband 4 gewickelt. Alternativ können auch mehrere Brandschutzbänder 4 um eine Flachakkumulatorzellen 2 gewickelt sein. Es kann auch ein Brandschutzband 4 oder eine Brandschutzmatte 5 zwischen jeweils zwei der Flachakkumulatorzellen 2 eingelegt sein. An der inneren Wand des Gehäuses 3 ist eine Brandschutzmatte 5 vorgesehen.

Wie unter Figur 5 beschrieben, sollte so viel Brandschutzband 4 bzw. Brandschutzmatte 5 um eine Flachakkumulatorzelle 2 herum angeordnet sein, dass es im aufgeschäumten Zustand zumindest eine geschlossene Schicht um die Flachakkumulatorzelle 2 herum bildet. Entsprechend sollte die Brandschutzmatte 5 derart angeordnet sein, dass sie im aufgeschäumten Zustand zumindest eine geschlossene Schicht an der Innenwand des Gehäuses 3 bildet.

Figur 9 zeigt einen Querschnitt durch einen Akkumulator 1 mit zwölf Flachakkumulatorzellen 2 im Fehlerfall. Auch hier sind die eingebrachten Brandschutzbänder 4 und die Brandschutzmatte 5 aufgeschäumt und füllen die Hohlräume in dem Gehäuse 3 vollständig aus. Hier lag ebenfalls eine fehlerhafte Akkumumlatorzelle 6 vor. Analog zu Figur 6 konnte das Übergreifen eines Feuers von der fehlerhaften Akkumulatorzelle 6 auf die übrigen Akkumulatorzellen 2 verhindert werden.

## Patentansprüche

1. Akkumulator (1) für eine Handwerkzeugmaschine, mit
einer Anzahl von Akkumulatorzellen (2), wobei mindestens eine der Akkumulatorzellen (2) als Isolations-Akkumulatorzelle (6) ausgeführt ist, und
einen ein intumeszierendes Material aufweisenden Brandschutzmantel (4, 5), welcher die Isolations-Akkumulatorzelle (6) zumindest teilweise derart ummantelt, dass die Isolations-Akkumulatorzelle (6) bei einer vorgegebenen Temperatur von dem Brandschutzmantel (4, 5) derart umgeben ist, dass die Isolations-Akkumulatorzelle (6) thermisch isoliert ist, **dadurch gekennzeichnet, dass** der Brandschutzmantel (4, 5) eine Netzstruktur aufweist.

2. Akkumulator nach Anspruch 1, **dadurch gekennzeichnet, dass** der Brandschutzmantel (4, 5) eingerichtet ist, bei der vorgegebenen Temperatur die Sauerstoffzufuhr zu der Isolations-Akkumulatorzelle (6) zu verringern.

3. Akkumulator nach Anspruch 1, **dadurch gekennzeichnet, dass** der Brandschutzmantel (4, 5) eingerichtet ist, bei der vorgegebenen Temperatur flüssigkeitsdicht zu sein.

4. Akkumulator nach einem der vorhergehenden Ansprüche, **dadurch gekennzeichnet, dass** der Brandschutzmantel (4, 5) ein Polymer aufweist.

5. Akkumulator nach einem der vorhergehenden Ansprüche, **dadurch gekennzeichnet, dass** der Brandschutzmantel (4, 5) ein Brandschutzband (4), eine Brandschutzmatte (5), einen Brandschutzschaum oder eine Schaumstoffmatte aufweist.

6. Akkumulator nach einem der vorhergehenden Ansprüche, **dadurch gekennzeichnet, dass** alle Akkumulatorzellen (2) als Isolations-Akkumulatorzellen (6) ausgebildet sind.

7. Akkumulator nach einem der vorhergehenden Ansprüche, **dadurch gekennzeichnet, dass** der Brandschutzmantel (4, 5) alle Akkumulatorzellen (2) zusammen zumindest teilweise derart ummantelt, dass die Akkumulatorzellen (2) in dem Akkumulator (1) bei der vorgegebenen Temperatur von dem Brandschutzmantel (4, 5) derart umgeben sind, dass die Akkumulatorzellen (2) von der Umgebung thermisch isoliert sind.

8. Akkumulator nach Anspruch 7, **dadurch gekennzeichnet, dass** der Akkumulator (1) ein Gehäuse (3) aufweist und der Brandschutzmantel (4, 5) zumindest teilweise in das Gehäuse (3) integriert ist.

9. Akkumulator nach einem der vorhergehenden Ansprüche, **dadurch gekennzeichnet, dass** die Akkumulatorzellen (2) in einem Halter (220) aufgehängt sind und der Halter (220) aus einem Brandschutzmaterial ist.

10. Akkumulator nach einem der vorhergehenden Ansprüche, **dadurch gekennzeichnet, dass** der Akkumulator (1) ein Gehäuse (3) aufweist und der Brandschutzmantel (4, 5) zumindest teilweise innerhalb des Gehäuses (3) angeordnetes Material derart ummantelt, dass das Material bei der vorgegebenen Temperatur von dem Brandschutzmantel (4, 5) derart umgeben ist, dass das Material thermisch isoliert ist.

11. Handwerkzeugmaschine mit einem Akkumulator (1) nach einem der Ansprüche 1 bis 10.

12. Verfahren zum Herstellen eines Akkumulators (1) für eine Handwerkzeugmaschine, mit den Schritten:
Bereitstellen einer Anzahl von Akkumulatorzellen (2), wobei mindestens eine der Akkumulatorzellen (2) als Isolations-Akkumulatorzelle (6) vorgesehen ist, und eines ein intumeszierendes Material aufweisenden Brandschutzmantels (4, 5), und zumindest teilweises Ummanteln der Isolations-Akkumulatorzellen (6) mit dem Brandschutzmantel (4, 5), derart, dass die Isolations-Akkumulatorzelle (6) bei einer vorgegebenen Temperatur von dem Brandschutzmantel (4, 5) derart umgeben ist, dass die Isolations-Akkumulatorzelle (6) thermisch isoliert ist, wobei der Brandschutzmantel (4, 5) eine Netzstruktur aufweist.

## Claims

1. Battery pack (1) for a portable power tool, with
a number of accumulator cells (2), in which at least one of the accumulator cells (2) is designed as an insulation-accumulator cell (6), and
a fire protection jacket (4, 5) holding intumescent material, which at least partially surrounds the insulation-accumulator cell (6) in such a manner that the insulation-accumulator cell (6) is enclosed by the fire protection jacket (4, 5) at a pre-determined temperature in such a manner that the insulation-accumulator cell (6) is thermally insulated, **characterised in that** the fire protection jacket (4, 5) has a mesh structure.

2. Battery pack in accordance with claim 1, **characterised in that** the fire protection jacket (4, 5) is adapted to reduce the flow of oxygen to the insulation-accumulator cell (6) at the pre-determined temperature.

3. Battery pack in accordance with claim 1, **characterised in that** the fire protection jacket (4, 5) is adapted to be impervious to liquids at the pre-determined temperature.

4. Battery pack in accordance with one of the preceding claims, **characterised in that** the fire protection jacket (4, 5) comprises a polymer.

5. Battery pack in accordance with one of the preceding claims, **characterised in that** the fire protection jacket (4, 5) has a fire protection strip (4), a fire protection mat (5), a fire protection foam or a foam mat.

6. Battery pack in accordance with one of the preceding claims, **characterised in that** all the accumulator cells (2) are designed as insulation-accumulator cells (6).

7. Battery pack in accordance with one of the preceding claims, **characterised in that** the fire protection jacket (4, 5) at least partially surrounds all the accumulator cells (2) together in such a manner that the accumulator cells (2) in the battery pack (1) are enclosed by the fire protection jacket (4,5) at a pre-determined temperature in such a manner that the accumulator cells (2) are thermally insulated from the surroundings.

8. Battery pack in accordance with claim 7, **characterised in that** the battery pack (1) has a case (3) and the fire protection jacket (4, 5) is at least partially integrated into the case (3).

9. Battery pack in accordance with one of the preceding claims, **characterised in that** the accumulator cells (2) are suspended in a holder (220) and the holder (220) is made of a fire protection material.

10. Battery pack in accordance with one of the preceding claims, **characterised in that** the battery pack (1) has a case (3) and the fire protection jacket (4, 5) is at least partially surrounded by the material arranged within the case (3) in such a manner that the material is enclosed by the fire protection jacket (4, 5) at the pre-determined temperature in such a manner that the material is thermally insulated.

11. Portable power tool with a battery pack (1) in accordance with one of claims 1 to 10.

12. Process for manufacturing a battery pack (1) for a portable power tool with the following steps: Provision of a number of accumulator cells (2), in which at least one of the accumulator cells (2) is designed as an insulation accumulator cell (6), and of fire protection jacket (4, 5) holding an intumescent material (4, 5), and at least partial surrounding of the insulation-accumulator cell (6) with the fire protection jacket (4, 5) in such a manner that the insulation-accumulator cell (6) is enclosed by the fire protection jacket (4, 5) at a pre-determined temperature in such a manner that the insulation-accumulator cell (6) is thermally insulated, in which the fire protection jacket (4, 5) has a mesh structure.

## Revendications

1. Accumulateur (1) pour une machine-outil manuelle, comportant :
une pluralité de cellules d'accumulateur (2), dans laquelle au moins l'une des cellules d'accumulateur (2) est mise en oeuvre sous la forme d'une cellule d'accumulateur d'isolation (6), et
une enveloppe pare-feu (4, 5) comportant un matériau intumescent, qui enveloppe au moins partiellement la cellule d'accumulateur d'isolation (6) de telle sorte que la cellule d'accumulateur d'isolation (6) est entourée par l'enveloppe pare-feu (4, 5) à une température prédéterminée de telle sorte que la cellule d'accumulateur d'isolation (6) est thermique isolée, **caractérisé en ce que** l'enveloppe pare-feu (4, 5) a une structure réticulaire.

2. Accumulateur selon la revendication 1, **caractérisé en ce que** l'enveloppe pare-feu (4, 5) est conçue pour réduire l'apport d'oxygène de la cellule d'accumulateur d'isolation (6) à la température prédéterminée.

3. Accumulateur selon la revendication 1, **caractérisé en ce que** l'enveloppe pare-feu (4, 5) est conçue pour être étanche aux liquides à la température prédéfinie.

4. Accumulateur selon l'une des revendications précédentes, **caractérisé en ce que** l'enveloppe pare-feu (4, 5) comporte un polymère.

5. Accumulateur selon l'une des revendications précédentes, **caractérisé en ce que** l'enveloppe pare-feu (4, 5) comporte une bande pare-feu (4), un tapis pare-feu (5), une mousse pare-feu ou un tapis en mousse.

6. Accumulateur selon l'une des revendications précédentes, **caractérisé en ce que** toutes les cellules d'accumulateur (2) sont formées comme des cellules d'accumulateur d'isolation (6).

7. Accumulateur selon l'une des revendications précédentes, **caractérisé en ce que** l'enveloppe pare-feu (4, 5) enveloppe au moins partiellement toutes les cellules d'accumulateur (2) de telle sorte que les cellules d'accumulateur (2) dans l'accumulateur (1) sont entourées par l'enveloppe pare-feu (4, 5) à la température prédéfinie de telle sorte que les cellules d'accumulateur (2) sont thermiquement isolés de l'environnement.

8. Accumulateur selon la revendication 7, **caractérisé en ce que** l'accumulateur (1) comporte un boîtier (3) et l'enveloppe pare-feu (4, 5) est intégrée au moins partiellement dans le boîtier (3).

9. Accumulateur selon l'une des revendications précédentes, **caractérisé en ce que** les cellules d'accumulateur (2) sont suspendues dans un support (220) et le support (220) est constitué d'un matériau pare-feu.

10. Accumulateur selon l'une des revendications précédentes, **caractérisé en ce que** l'accumulateur (1) comporte un boîtier (3) et l'enveloppe pare-feu (4, 5) enveloppe de la matière agencée au moins partiellement à l'intérieur du boîtier (3) de telle sorte que la matière est entourée à la température prédéfinie par l'enveloppe pare-feu (4, 5) de telle sorte que la matière est thermiquement isolée.

11. Machine-outil manuelle comportant un accumutateur (1) selon l'une des revendications 1 à 10.

12. Procédé pour fabriquer un accumulateur (1) pour une machine-outil manuelle, comportant les étapes consistant à :
fournir une pluralité de cellules d'accumulateur (2), au moins l'une des cellules d'accumulateur (2) étant prévue sous la forme d'une cellule d'accumulateur d'isolation (6), et une enveloppe pare-feu (4, 5) comportant un matériau intumescent, et envelopper au moins partiellement les cellules d'accumulateur d'isolation (6) avec l'enveloppe pare-feu (4, 5) de telle sorte que les cellules d'accumulateur d'isolation (6) sont entourées à la température prédéterminée par l'enveloppe pare-feu (4, 5) telle sorte que la cellule d'accumulateur d'isolation (6) est thermiquement isolée, l'enveloppe pare-feu (4, 5) comportant une structure réticulaire.
